# EUROPEAN PATENT APPLICATION

(11) **EP 3 333 246 A1**
(43) Date of publication of application: **13.06.2018**
(21) Application number: 17203191.6
(22) Date of filing: 23.11.2017
(51) Int. Cl.: C12H 1/07, C12H 1/08, A23L 2/46, A23L 2/72, A23L 3/46, B01D 35/02, B01D 39/00, B01D 46/00, B01D 29/11, B01D 61/14

(54) **PROCESSING LIQUID FOOD**

(30) Priority: 12.12.2016 EP 16203402
(71) Applicant: Tetra Laval Holdings & Finance S.A., 1009 Pully (CH)
(72) Inventor: PANTZAR, Göran, 28434 Perstorp (SE); LINNÉ, Ulrika, 22736 LUND (SE); RENDINA, Antonio, 41012 Carpi (IT); WIKLUND, Niclas, 686 98 Gräsmark (SE)
(74) Representative: Tetra Pak - Patent Attorneys SE

(57) **Abstract**

Processing of liquid food (102) in a system (100) is disclosed. The liquid food (102) is provided from a balance tank (104) to a heat treatment unit 106. The heat treating unit (106) receives and heat treats the liquid food (102) to provide heat treated liquid food (102a). A filter (108) receives and filters the heat treated liquid food (102a) to provide filtered, heat treated liquid food (102b). A packaging device (110) receives and packages the filtered heat treated liquid food (102b). Filtering of the liquid food (102) takes place on a heat treated side of the system (100), as close as possible to the packaging device (110).

## Description

### Technical Field

The invention relates to processing liquid food by transferring the liquid food from a balance tank through a heat exchanger to a packaging device.

### Background Art

Processing of liquid food is often performed in a processing system that comprises a balance tank, a heat treating unit and a packaging device. Liquid food is transferred, by use of various components such as pumps and tubing, through the heat treatment unit and obtains heat from a heating medium whereby the temperature of the liquid food reaches a desired temperature that provides heat treatment of the liquid food.

Having passed through the heat treatment unit, the liquid food may be provided to the packaging device that creates packages of heat treated liquid food for subsequent distribution to consumers.

Needless to say, it is important to ensure that the packages of liquid food that are distributed to consumers are free of contamination, e.g. contamination in form of solid particles. Different type of particles may be released in the processing system with its components. For example, particles may be released due to wear and tear, typically if maintenance routines are not properly followed. Also, particles may be released if worn equipment parts are replaced by new parts that do not fulfill quality requirements prescribed by the manufacturer of the processing system. As a result, small particles may be released from equipment, and in some circumstances a larger amount/volume of particles can be released, for example at installation, service and in connection with failures of, e.g., gaskets.

Accelerated degradation of gaskets in tubing or in other processing equipment may also be caused by the combination of the chosen material of the gasket (typically if the material is not of a type recommended by the manufacturer of the processing system), the cleaning method used and the product, i.e. the type of liquid food that is being processed.

Released particles, e.g. from degraded gaskets, in a microbiologically contaminated environment, e.g. at a point before heat treatment, may cause subsequent microbiological contamination after heat treatment. That is, the impact on the quality of the liquid food is dependent on the type and size of any particle and the microbiology environment.

This problem has either not been fully recognized or it has not been addressed satisfactorily in the prior art.

### Summary

It is an object of the invention to at least partly overcome one or more of the above-identified limitations of the prior art related to particle contamination in a system for processing liquid food.

Such an object is achieved as disclosed herein in a first aspect by a system for processing liquid food. The system comprises a balance tank configured to provide the liquid food and a heat treatment unit. The heat treating unit is configured to receive and heat treat the liquid food to provide heat treated liquid food. The system further comprises a filter that is configured to receive and filter the heat treated liquid food to provide filtered, heat treated liquid food. The system also comprises a packaging device that is configured to receive and package the filtered heat treated liquid food.

For example, the filter may be configured to remove particles having a size greater than 73 micrometer from the liquid food.

In such a system, filtering of the liquid food takes place on the heat treated side, as close as possible to the packaging device where the heat treated food is typically packed into sealed packages. In case the heat treatment provides sterilization, then the filtered liquid food is filtered in the aseptic part of the system. By filtering as far downstream as possible in the system, the probability of filtering away foreign and potentially harmful particles emanating from the system is at least enhanced. This has an advantage in that it maximizes the quality of the produced liquid food.

The system may comprise tubing that is configured to convey the liquid food from the balance tank to the heat treatment unit, from the heat treatment unit to the filter and from the filter to the packaging device. A plurality of components, such as any of a pump, a valve, a deaerator, are typically arranged along the tubing between the balance tank and the packaging device. The plurality of components may be arranged such that a first number of components are arranged between the balance tank and the filter and a second number of components are arranged between the filter and the packaging device, where the second number of components is lower than the first number of components. For example, the second number of components may be zero. That is, in such embodiments, no component is present between the filter and the packaging device. In this context, "component" does not include conventional pipes and tubing which purpose merely lies in conveying the liquid food from the filter and the packaging device.

That is, by minimizing the number of components through which the liquid food must pass, the probability of filtering away foreign and potentially harmful particles emanating from the system is further enhanced and even minimized, with associated maximization of the quality of the processed liquid food.

The filter may comprise at least one clamp and at least one support ring. The at least one clamp and the at least one support ring may be configured to operate at a sterilization temperature and during a predetermined sterilization time. The sterilization is typically performed when the processing systems is cleaned. The at least one support ring may be made of polytetrafluoroethylene (PTFE).

The object of the present disclosure is also achieved as disclosed herein in a second aspect by a method for processing liquid food. The method comprises providing the liquid food from a balance tank to a heat treating unit, heat treating the liquid food to provide heat treated liquid food to a filter. The heat treated liquid food is filtered to provide filtered heat treated liquid food to a packaging device and the filtered heat treated liquid food is then packaged.

Such a method and various embodiments of such a method have technical effects and advantages that correspond to the technical effects and advantages of the system of the first aspect as summarized above. The method may include any feature described in connection the system, and vice versa.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a-c are schematically illustrated block diagrams of embodiments of a system for processing liquid food,
Fig. 2 schematically illustrates a filter that is used in the system of Fig. 1, and
Fig. 3 is a flowchart of embodiments of a method for processing liquid food.

### Detailed Description

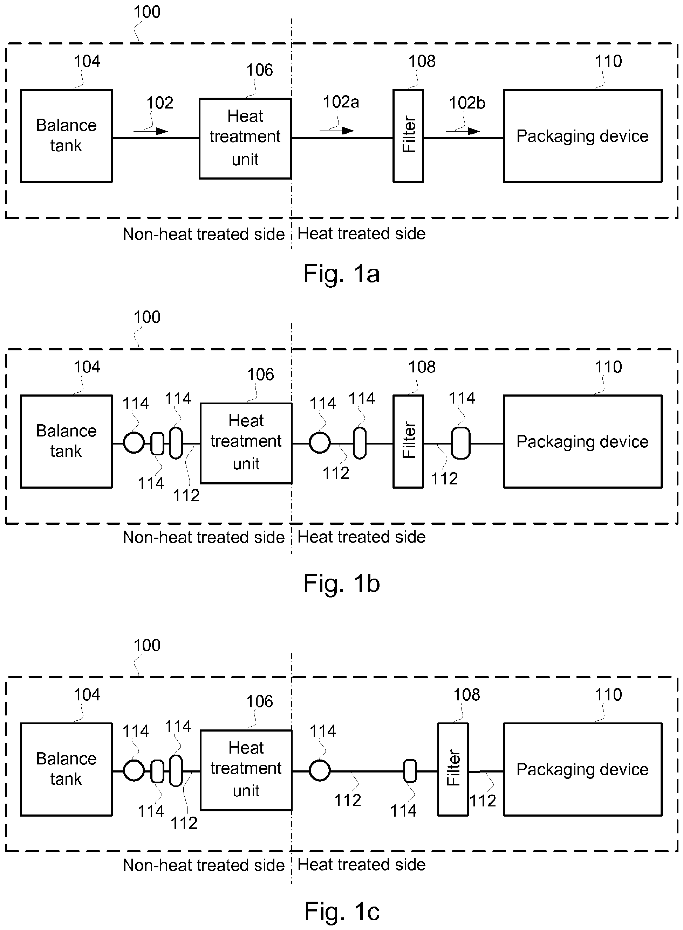

With reference to **Fig. 1a****,** a system 100 for processing liquid food 102 is illustrated. The system 100 comprises a balance tank 104. The balance tank 104 is configured to provide the liquid food 102. The system 100 further comprises a heat treatment unit 106 that is configured to receive and heat treat the liquid food 102 to provide heat treated liquid food 102a. Following the heat treatment unit 106, i.e. downstream, is a filter 108 that is configured to receive and filter the heat treated liquid food 102a to provide filtered, heat treated liquid food 102b. The system further comprises a packaging device 110 that is configured to receive and package the filtered, heat treated liquid food 102b.

Each of the balance tank 104, the heat treatment unit 106 and the packaging device 110 are conventional units that are commonly used for processing liquid food that is heat treated and aseptically packed by the packaging device 110.

As indicated in Fig. 1a, the system 100 is divided into a non-heat treated side and a heat treated side. The non-heat treated side comprises the balance tank 104 and the heat treating unit 106. The heat treated side comprises the filter 108 and the packaging device 110. Depending on how long time period the liquid food 102 spends in the heat treating device 106 and to which temperature the liquid food 102 is heated in the heat treating device 106, the heat treated side may be an aseptic side.

From above follows that "non-heat treated side" refers to the part of the system inside which the liquid food is considered to be not fully heat treated. "heat treated side" refers to the part of the system inside which the liquid food is considered to be fully heat treated. Heat treated food refers to food in which the microorganisms in the liquid food have, due to the heat treatment, been killed or at least reduced to an extent where the number of viable pathogens is so low that that they are unlikely to cause disease, as long as the liquid food is stored as prescribed and is consumed before its expiration date.

With reference to Fig. 1b and Fig. 1c, various embodiments of the system 100 will be described. In **Fig. 1b****,** the system 100 comprises tubing 112 that is configured to convey the liquid food 102, 102a, 102b from the balance tank 104 to the heat treatment unit 106, from the heat treatment unit 106 to the filter 108 and from the filter 108 to the packaging device 110. A plurality of components 114, such as a pump, a valve, a deaerator etc., are arranged along the tubing 112 between the balance tank 104 and the packaging device 110.

It is to be noted that there is a distinction between the tubing 112 and the components 114 in that none of the components 114 has a function that only involves conveying the liquid food, whereas the function of the tubing 112 lies solely in conveying the liquid food 102, 102a, 102b.

The plurality of components 114 are arranged such that a first number of components are arranged between the balance tank 104 and the filter 108. As Fig. 1b exemplifies, this first number is five due to the fact that three components 114 are arranged between the balance tank 104 and the heat treatment unit 106 and two components 114 are arranged between the heat treatment unit 106 and the filter 108. A second number of components are arranged between the filter 108 and the packaging device 110. The second number of components is lower than the first number of components. As exemplified by the embodiment in Fig. 1b, this second number of components 114 may be a single one and, as exemplified by the embodiment in **Fig. 1c****,** this second number of components 114 may be zero, i.e. there is no component between the filter 108 and the packaging device 110.

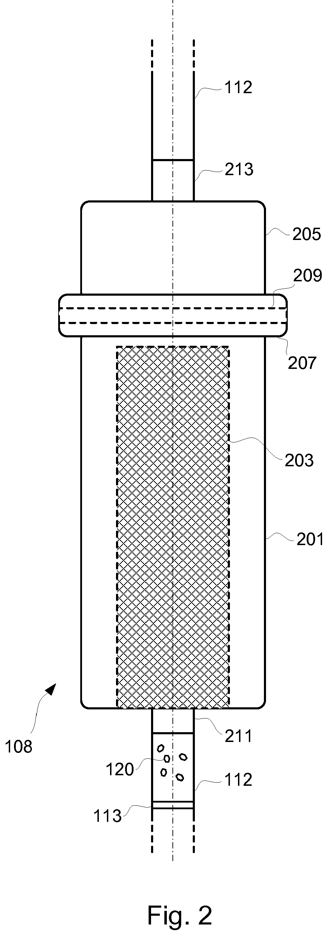

Turning now to **Fig. 2****,** embodiments of the filter 108 will be described in more detail. The filter may comprise an inlet 211 and an outlet 213 that connect to the tubing 112. Schematically illustrated particles 120 that, e.g., have been released from a gasket 113 due to wear located upstream in relation to the filter 108 are about to enter the inlet 211 of the filter 108.

As illustrated, the filter 108 may comprise at least one clamp 207 and at least one support ring 209. The at least one clamp 207 may be configured to clamp together a body 201 and a top 205 of the filter, noting also that the body 201 is hollow and accommodates a fine mesh strainer 203. The at least one clamp 207 and the at least one support ring 209 are configured to operate at a sterilization temperature and during a predetermined sterilization time. For example, the sterilization temperature may be 130 °C and the predetermined sterilization time may be 30 minutes.

The at least one support ring 209 may be made of polytetrafluoroethylene (PTFE). The filter 108 may be configured to remove particles 120 having a size greater than 73 micrometer from the liquid food 102. For example, the fine mesh strainer may have a mesh size of 73 micrometer.

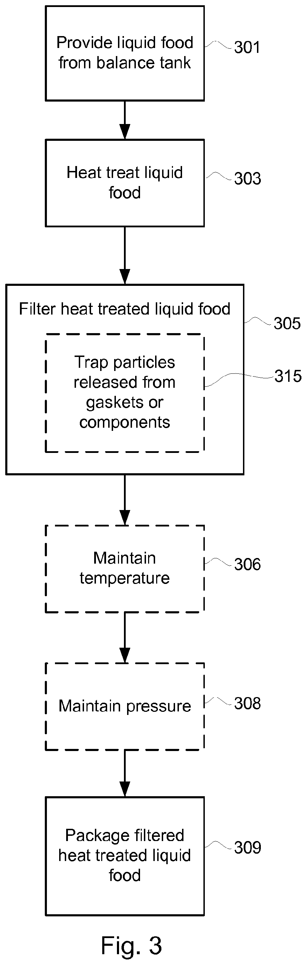

Turning now to **Fig. 3****,** and with continued reference to Fig. 1a-c and Fig. 2, a method for processing liquid food 102 is illustrated in terms of a number of steps.

In a first step the liquid food 102 is provided 301 from the balance tank 104 to the heat treating unit 106. Next, the liquid food 102 is heat treated 303 to provide heat treated liquid food 102a to the filter 108. The heat treated liquid food 102a is filtered 305 to provide filtered heat treated liquid food 102b to the packaging device 110. This filtering 305 of the heat treated liquid food 102a may comprise a step of trapping 315 particles 120 that have been released from gaskets 113 or components 114 that are located along tubing 112, the tubing 112 being configured to convey the liquid food 102, 102a, 102b from the balance tank 104, via the heat treatment unit 106, and to the filter 108. Finally the filtered heat treated liquid food 102b is packaged 309.

The method may involve further steps that specify that the filtered heat treated liquid food 102b is subject to no active change of properties subsequent to the filtering 305. This may involve, after the filtering 305 and until the packaging 309, maintaining 306 a temperature of the filtered heat treated liquid food 102b within a range of ±5 °C. This means that no heat treatment of the liquid food is done after the filtering 305. Such steps may also or alternatively involve, after the filtering 305 and until the packaging 309, maintaining 308 a pressure of the filtered heat treated liquid food 102b within a range of ±0,5 bar. This means that no pumping of the liquid food is done after the filtering 309.

From the description above follows that, although various embodiments of the invention have been described and shown, the invention is not restricted thereto, but may also be embodied in other ways within the scope of the subject-matter defined in the following claims.

## Claims

1. A system (100) for processing liquid food (102), comprising:
- a balance tank (104) configured to provide the liquid food (102),
- a heat treatment unit (106) configured to receive and heat treat the liquid food (102) to provide heat treated liquid food (102a),
- a filter (108) configured to receive and filter the heat treated liquid food (102a) to provide filtered, heat treated liquid food (102b), and
- a packaging device (110) configured to receive and package the filtered heat treated liquid food (102b).

2. The system (100) of claim 1, comprising:
- tubing (112) configured to convey the liquid food (102, 102a, 102b) from the balance tank (104) to the heat treatment unit (106), from the heat treatment unit (106) to the filter (108) and from the filter (108) to the packaging device (110),
- a plurality of components (114) arranged along the tubing (112) between the balance tank (104) and the packaging device (110), where the plurality of components (114) are arranged such that a first number of components are arranged between the balance tank (104) and the filter (108) and a second number of components are arranged between the filter (108) and the packaging device (110), where the second number of components is lower than the first number of components.

3. The system (100) of claim 2, where the second number of components is zero.

4. The system (100) of claim 2 or claim 3, where the components comprise any of a pump, a valve, a deaerator.

5. The system (100) of any of claims 2 to 4, where the filter (108) comprises at least one clamp (207) and at least one support ring (209), where the at least one clamp (207) and the at least one support ring (209) are configured to operate at a sterilization temperature and during a predetermined sterilization time.

6. The system (100) of claim 5, where the at least one support ring (209) is made of polytetrafluoroethylene, PTFE.

7. The system (100) of any of claims 1 to 6, where the filter (108) is configured to remove particles (120) having a size greater than 73 micrometer from the liquid food (102).

8. A method for processing liquid food (102), comprising:
- providing (301) the liquid food (102) from a balance tank (104) to a heat treating unit (106),
- heat treating (303) the liquid food (102) to provide heat treated liquid food (102a) to a filter (108),
- filtering (305) the heat treated liquid food (102a) to provide filtered heat treated liquid food (102b) to a packaging device (110), and
- packaging (309) the filtered heat treated liquid food (102b).

9. The method of claim 8, wherein the filtering (305) of the heat treated liquid food (102a) comprises:
- trapping (315) particles (120) that have been released from gaskets (113) or components (114) that are located along tubing (112), said tubing (112) being configured to convey the liquid food (102, 102a, 102b) from the balance tank (104), via the heat treatment unit (106), and to the filter (108).

10. The method of claim 8 or 9, comprising, between the filtering (305) and the packaging (309):
- maintaining (306) a temperature of the filtered heat treated liquid food (102b) within a range of ±5 °C.

11. The method of any of claims 8 to 10, comprising, between the filtering (305) and the packaging (309):
- maintaining (308) a pressure of the filtered heat treated liquid food (102b) within a range of ±0,5 bar.
